# EUROPEAN PATENT SPECIFICATION

(11) **EP 4 477 348 B1**
(45) Date of publication and mention of the grant of the patent: **05.08.2026**
(21) Application number: 22933045.1
(22) Date of filing: 12.10.2022
(51) Int. Cl.: B23K 26/348, B23K 26/70, B23K 37/04, B23K 26/08, B23K 31/00, B61F 1/08, B23K 101/18

(54) **WELDING DEVICE, AND WELDING METHOD USING SUCH DEVICE**
SCHWEISSVORRICHTUNG, UND SCHWEISSVERFAHREN UNTER VERWENDUNG SOLCHER VORRICHTUNG
DISPOSITIF DE SOUDAGE, ET PROCÉDÉ DE SOUDAGE UTILISANT UN TEL DISPOSITIF

(30) Priority: 22.03.2022 CN 202210287846
(43) Date of publication of application: 18.12.2024
(73) Proprietor: CRRC Qingdao Sifang Co., Ltd., Qingdao, Shandong 266111 (CN)
(72) Inventor: HAN, Xiaohui, Qingdao, Shandong 266111 (CN); LIU, Yong, Qingdao, Shandong 266111 (CN); ZHANG, Zhiyi, Qingdao, Shandong 266111 (CN); XU, Ye, Qingdao, Shandong 266111 (CN); LIANG, Wenjian, Qingdao, Shandong 266111 (CN); LIU, Jianwei, Qingdao, Shandong 266111 (CN); SONG, Hongyu, Qingdao, Shandong 266111 (CN)
(74) Representative: Dilg, Haeusler, Schindelmann Patentanwaltsgesellschaft mbH
(86) International application number: PCT/CN2022/124835
(87) International publication number: WO 2023/178994

(56) References cited:
- CN-A- 102 556 099
- CN-A- 102 974 948
- CN-A- 104 354 709
- CN-A- 106 964 902
- CN-A- 109 967 951
- CN-A- 112 247 442
- CN-A- 112 477 904
- CN-A- 113 909 745
- CN-A- 113 909 745
- CN-A- 114 603 258
- CN-U- 201 941 800
- DE-C1- 19 506 586
- JP-A- 2011 148 400
- US-A1- 2016 001 427

## Description

The present invention relates to the field of welding, and in particular, to a weld device and a weld method, see claims 1 and 3.

### BACKGROUND

An underframe bolster beam, a traction beam and a bogie frame side beam at the end of a vehicle body are the most important load-bearing components of rail vehicles. Since the rail vehicles are subjected to severe alternating load conditions during operation, multi-layer and multi-pass melt active gas (MAG) arc welding process is adopted to ensure good load-bearing service capacity of the rail vehicles. A large heat input of arc welding results in serious welding deformation and a lot of manpower and material resources are required after welding for adjustment and correction, resulting in strength loss and performance degradation. An added back pad seriously reduces fatigue resistance of a box-shaped structure.

CN106964902A discloses a composite welding method of a pillow beam comprising the following steps that laser-MAG composite welding is used for welding the pillow beam of the stainless steel material, and inserted-connected structures of rib plates are optimized; during manufacturing, the rib plates are preassembled and welded to form a rib plate assembly, then the whole structure is welded, so that the pillow beam can adopt to the stainless steel material to replace weathering resistant steel material in whole, the lightweightening of the pillow beam is achieved, and the corrosion resistance of the pillow beam is improved; through the welding modes of inserting connection and corner connection, and a to-be-welded welding seam is placed on the outer surface of a box type structure to adapt to a technology of single-face welding double-face forming of the laser-MAG composite welding; and self-restraint of pillow beam welding is achieved through the self-stiffness of the inserted-connected structures, the advantages of the laser-MAG composite welding of deep welding, low heat input, small welding deformation and good gap adaptability are played, a manufacturing technology without adjustment and repair of the stainless steel pillow beam is achieved, so that the manufacturing and processing efficiency of the rail vehicle are improved, and production cost is reduced.

CN113909745A (describing the preamble of claims 1 and 3) shows a welding deformation regulation and control device comprising a supporting part and an adjusting part; a supporting surface for supporting a box to be welded is formed on the supporting part; the adjusting part is connected with the supporting part and at least abuts against the welding face of the box to be welded; and in the welding process, the adjusting part adjusts the magnitude of the acting force on the welding face of the box to be welded and/or the force application position, and therefore the flatness of the box to be welded is regulated and controlled. The multi-point flexible support is arranged on the sleeper beam box-type structure, so that the positions and the acting force of the positioning support and the rigid constraint point of each step of the sleeper beam box-type structure can be quantitatively output in real time in the welding process, and three-dimensional dynamic real-time monitoring on the manufacturing precision and the stress distribution of the sleeper beam box-type structure in the welding process is realized, and fine regulation and control of real-time dynamic regulation and step-by-step fine regulation are formed, the manufacturing precision of a sleeper beam is improved, and post-welding regulation and repair of the sleeper beam box-type structure are eliminated.

US2016001427A discloses a welding fixture including an electromagnet, a non-magnetic support configured to receive at least two sheets of material to be welded, and one or more clamping shoes configured to cooperate with the electromagnet to apply a clamping pressure to the at least two sheets of material and the non-magnetic support as a result of a magnetic force produced by the electromagnet. A first of the at least two sheets of material is in contact with at least one of the one or more clamping shoes, and a second of the at least two sheets of material is in contact with at least the non-magnetic support. The one or more clamping shoes being shaped such that a perimeter defined by the one or more clamping shoes is located in the vicinity of a defined weld line to be welded on the at least two sheets of material, the weld line remaining substantially free from optical obstruction during production of the magnetic force.

### BRIEF SUMMARY

The present invention provides a weld device for a weld structure according to claim 1, which solves defects of strength loss and performance degradation due to manual adjustment and correction, inability to effectively suppress welding deformation, large workload of repeated check, inability to accurately and dynamically adjust the weld structure based on the evolution trend of deformation and change amount of a weld structure, and poor anti-deformation effect. By providing multi-point flexible support at a support surface, welding deformation is finely controlled, welding defects are precisely suppressed, microstructure performance is effectively improved, the manufacturing accuracy is increased, the manufacturing cost is reduced, and the production efficiency is greatly improved.

The present invention further provides a weld method using a weld device according to claim 3, which solves defects of inability to avoid adjustment and correction to a weld structure, inability to effectively suppress welding deformation, large workload of repeated check, inability to accurately and dynamically adjust the weld structure based on the evolution trend of deformation and change amount of a weld structure, and poor anti-deformation effect. By adjusting a magnitude of the multi-point flexible force at the support surface, zero-gap rapid and precise assembly, multi-point flexible constraint and multi-energy field coordinated high-performance welding are provided, and engineering goals of fine control of welding deformation, effective suppression of welding defects and substantial improvement of weld microstructure performance are simultaneously achieved.

Preferred embodiments of the invention are defined in the dependent claims.

Additional aspects and advantages of the present invention will be set forth in part in the description which follows and, in part, will be apparent from the description.

### BRIEF DESCRIPTION OF THE DRAWINGS

To more clearly illustrate solutions in the present application or the related art, the accompanying drawings used in the description of the embodiments or the related art are briefly introduced below. It should be noted that the drawings in the following description are only some embodiments of the present application. For those of ordinary skill in the art, other drawings may be obtained based on these drawings without creative effort.
FIG. 1 is a first assembly schematic diagram of a weld structure;
FIG. 2 is a second assembly schematic diagram of a weld structure;
FIG. 3 is a third assembly schematic diagram of a weld structure;
FIG. 4 is a fourth assembly schematic diagram of a weld structure;
FIG. 5 is a fifth assembly schematic diagram of a weld structure;
FIG. 6 is a layout schematic diagram of a weld device; and
FIG. 7 is a schematic flowchart of a weld method.

### Reference numerals:

10: first cover plate; 11: first slot; 12: second slot;
20: second cover plate; 21: third slot; 22: fourth slot;
30: web plate;
40: rib plate;
50: groove;
60: support table;
70: drive unit;
80: magnetic unit;
90: sensor unit;
100: weld portion.

### DETAILED DESCRIPTION

To make the purpose, solutions and advantages of embodiments of the present invention clearer, solutions in the embodiments of the present invention will be described clearly and completely in conjunction with the drawings in the embodiments of the present invention.

In the description of the present application, it should be noted that, the orientation or positional relations specified by terms such as "central", "longitudinal", "traverse", "upper", "lower", "front", "back", "left", "right", "vertical", "horizontal", "top", "bottom", "inner", "outer" and the like, are based on the orientation or positional relations shown in the drawings, which is merely for convenience of description of the present application and to simplify description, but does not indicate or imply that the stated devices or components must have a particular orientation and be constructed and operated in a particular orientation, and thus it is not to be construed as limiting the present application. Furthermore, the terms "first", "second", "third" and the like are only used for descriptive purposes and should not be construed as indicating or implying a relative importance.

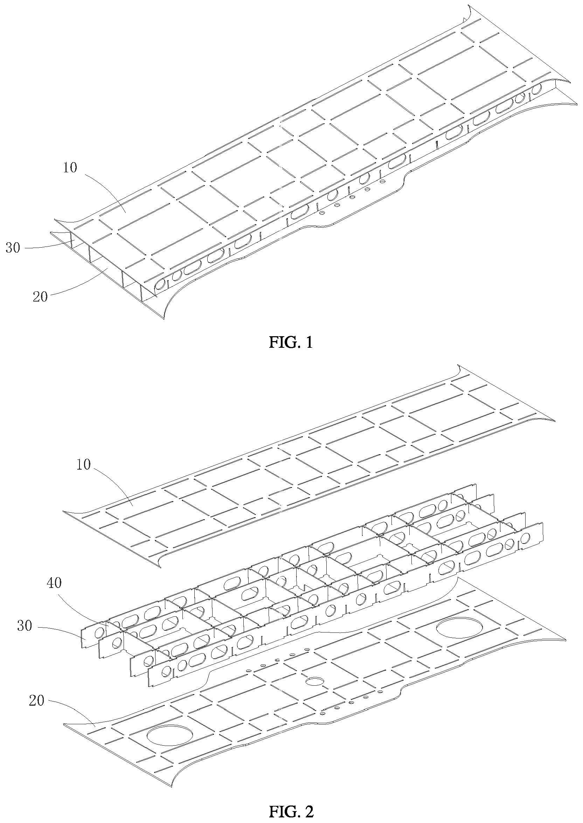

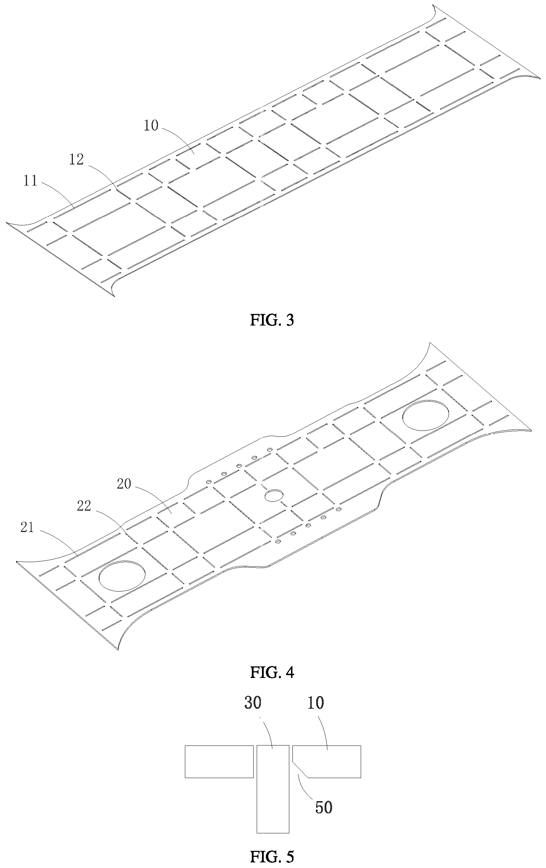

FIG. 1 to FIG. 5 show a weld structure, including: a first cover plate 10, a second cover plate 20, a plurality of web plates 30 and a plurality of rib plates 40. The first cover plate 10 and the second cover plate 20 are arranged at intervals. The web plates 30 are arranged at intervals along a first direction and are insertedly matched with the first cover plate 10 and the second cover plate 20, respectively and the rib plates 40 are arranged at intervals along a second direction and are insertedly matched with the first cover plate 10 and the second cover plate 20, respectively, the first direction and the second direction are perpendicular to each other and the web plates 30 and the rib plates 40 are insertedly matched with each other.

The present invention provides a weld structure which solves defects that a traditional box-shaped structure needs to be adjusted and corrected, resulting in strength loss and performance degradation. A stable and enclosed box-shaped structure is formed by inserting and interlocking the upper and lower cover plates, and the rigidity of the box-shaped structure is increased.

A surface of the first cover plate 10 is provided with a plurality of first slots 11 and a plurality of second slots 12. The first slots 11 are arranged at intervals along the first direction, and each of the first slots 11 is insertedly matched with each of the web plates 30 in a one-to-one correspondence. The second slots 12 are arranged at intervals along the second direction, and each of the second slots 12 is insertedly matched with each of the rib plates 40 in a one-to-one correspondence. Grooves 50 are provided at sides of each of the first slots 11 and the second slots 12 facing the second cover plate 20.

Specifically, it provides the first cover plate 10, and the first cover plate 10 is insertedly matched with the web plates 30 and the rib plates 40 by providing the first slots 11 and the second slots 12.

Further, the grooves 50 are provided at the sides of each of the first slot 11 and the second slot 12 facing the second cover plate 20, which facilitates the zero-gap rapid and precise assembly of the inserted interlocking structure. By providing the groove 50s, the back forming of the weld is further improved and the penetration of a weld root is improved, which not only meets the assembly requirements but also improves the assembly efficiency.

In a possible implementation, the groove 50 is a single V-shaped groove provided at the side of the first cover plate 10 facing the second cover plate 20.

A surface of the second cover plate 20 is provided with a plurality of third slots 21 and a plurality of fourth slots 22. The third slots 21 are arranged at intervals along the first direction, and each of the third slots 21 is insertedly matched with each of the web plates 30 in a one-to-one correspondence. The fourth slots 22 are arranged at intervals along the second direction, and each of the fourth slots 22 is insertedly matched with each of the rib plate 40 in a one-to-one correspondence. Grooves 50 are provided at sides of each of the third slots 21 and the fourth slots 22 facing the first cover plate 10.

It provides the second cover plate 20, and the second cover plate 20 is insertedly matched with the web plates 30 and the rib plates 40 by providing the third slots 21 and the fourth slots 22.

Furthermore, the grooves 50 are provided at the sides of each of the third slots 21 and the fourth slots 22 facing the second cover plate 10, which facilitates the zero-gap rapid and precise assembly of the inserted interlocking structure. By providing the groove 50, the back forming of the weld is further improved and the penetration of a weld root is improved, which not only meets the assembly requirements but also improves the assembly efficiency.

In a possible implementation, the groove 50 is a single V-shaped groove provided at the side of the first cover plate 10 facing the second cover plate 20.

In some possible implementations, the first cover plate 10, the second cover plate 20, the web plates 30 and the rib plates 40 are all made of high-strength weather-resistant steel.

With the increase of the running speed of the vehicle and urban rail trains, a requirement for lightweight trains is more urgent. Common low-alloy steel is replaced with the high-strength weather-resistant steel for providing lightweight design, which utilizes engineering characteristics of the high-strength weather-resistant steel, such as high strength, good plasticity, excellent fatigue performance, and good economy.

In a possible implementation, the weld structure is made of high-strength weather-resistant steel, and the thickness is thinned from the original 8 to 12 mm to 5 to 8 mm, which is at least 20% lighter than a traditional closed box-shaped structure.

In a possible implementation, the weld structure is applied to a chassis of a rail vehicle.

In a possible implementation, the weld structure is a bolster beam of the rail vehicle.

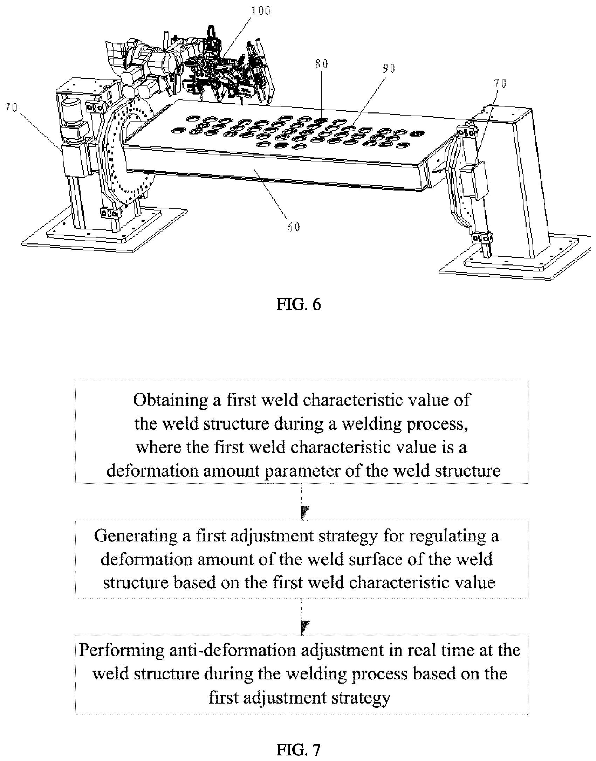

As shown in FIG. 1 to FIG. 6, the present invention provides a weld device for a weld structure, including a support portion, a weld portion 100 and an adjustment portion. The support portion is formed with a support surface for supporting the weld structure; the weld portion 100 is connected to the support portion for welding the weld structure; the adjustment portion is connected to the support portion and abuts against a weld surface of the weld structure. During a welding process of the weld structure by the weld portion, the adjustment portion regulates a flatness of the weld structure by adjusting a magnitude of a force acting on the weld surface of the weld structure

The weld device for the weld structure solves defects of strength loss and performance degradation due to manual adjustment and correction, inability to effectively suppress welding deformation, large workload of repeated check, inability to accurately and dynamically adjust the weld structure based on the evolution trend of deformation and change amount of a weld structure, and poor anti-deformation effect. By providing multi-point flexible support at a support surface, welding deformation is finely controlled, welding defects are precisely suppressed, microstructure performance is effectively improved, the manufacturing accuracy is increased, the manufacturing cost is reduced, and the production efficiency is greatly improved.

The support portion includes a support table 60 and a drive unit 70. A surface of the support table 60 forms a support surface and the drive unit 70 is connected to the support table 60 to adjust the rotation angle of the support table 60.

The present invention provides the support portion. The weld structure is supported by providing the support table 60, and the support table 60 is flappable through the drive unit and requirements of welding are satisfied from different angles.

It should be noted that a traditional bolster beam is welded using a single welding mechanism, that is, a single welding gun. In the process of welding the bolster beam, there are problems such as manual turning, repeated positioning and clamping, which makes it difficult to clamp and form the bolster in one step. Therefore, the processing accuracy of the bolster beam is affected and the labor intensity is increased. Meanwhile, the bolster beam is supported singly in the related art and the post-welding manufacturing accuracy of the box-shaped bolster structure still does not meet the adjustment-free standard under a single welding deformation suppression measure.

It should also be noted that the present invention does not limit the specific structure of the drive unit 70. The drive unit 70 includes a motor, a bearing, a support mechanism, a transmission mechanism, etc. For simplicity, the specific structure of the drive unit 70 are not elaborated too much in the present application. In practical applications, those skilled in the art can refer to the arrangement in related fields as required.

The weld portion 100 is a laser-arc hybrid welding mechanism connected with the support portion.

The present invention provides the weld portion 100. By combining laser-arc hybrid welding with the support portion and the adjustment portion, an entire manufacturing process from development of a product structure, research and development on the weld device to control of a welding process is innovated systematically, barriers of difficult assembly, low efficiency and poor stability of a closed box-shaped structure using traditional laser-arc hybrid welding are effectively broken through, engineering problems that a laser-arc hybrid welding gun has a large size and a traditional assembly mode has many spatial interferences are solved, and bottlenecks that welding porosity is difficult to avoid and a back has poor forming during laser-arc hybrid welding of medium and thick plates are broken through.

In a possible implementation, laser-arc hybrid welding cooperates with the groove 50 of the corresponding weld seam at the back of the weld structure, which greatly facilitates the escape of gas inside the weld pool of the laser-arc hybrid welding from the back of the weld pool, and effectively suppresses the welding porosity defects of laser-arc hybrid welding of a medium and thick plate.

In a possible implementation, the laser-arc hybrid welding mechanism completes the welding using a process of one-time welding and forming of a weld surface during the welding process of the weld structure.

The adjustment portion includes a plurality of magnetic units 80 and a plurality of sensor units 90. The magnetic units 80 are arranged at the support table 60 to position the weld structure through magnetic adsorption; and the sensor units 90 are arranged at the support table 60 to feed back welding parameters used in the welding process of the weld structure to the weld portion 100.

Within the adjustment portion, the magnetic units 80 and the sensor units 90 are arranged at a surface of the support table 60, that is, the support surface, to position the closed box-shaped weld structure made of the high-strength weather-resistant steel and obtain corresponding parameters during the welding process, and engineering goals of fine control of weld deformation, effective suppression of weld defects and significant improvement of weld structure performance are obtained.

It should be noted that the enclosed box-shaped structure of high-strength weather-resistant steel is complex, with a large number of weld seams, a small welding spacing (the minimum spacing is 5 mm), and strict assembly requirements, and the assembly error must be controlled within the range of 0 to 0.5 mm and assembly is difficult, and the traditional assembly mode is difficult to meet the special assembly requirements of laser-arc hybrid welding.

It is particularly stated here that although laser-arc hybrid welding has engineering characteristics such as small welding deformation, high manufacturing precision, strong penetration capability, good weld quality, fast welding speed, and high operating efficiency, it still has disadvantages that the laser-arc hybrid welding gun has large volume, a welding space is easily interfered, a traditional positioning and clamping device occupies a large amount of physical space when the laser-arc hybrid welding is used for the enclosed box-shaped structure and it is impossible to obtain full-automatic spatial welding of the enclosed box-shaped structure during laser-arc hybrid welding.

In a possible implementation, the enclosed box-shaped weld structure made of high-strength weather-resistant steel is adsorbed by arranging magnetic units 80 at the support table 60.

In a possible implementation, each of the magnetic units 80 is an electromagnet.

In a possible implementation, a plurality of high-precision electromagnets are embedded in the support table 60, and electromagnet adsorption control modules are distributed at multiple points along the length and width of the support table 60. The arrangement position of the electromagnet adsorption control modules is provided based on the workpiece support, positioning, and constraint requirements. Spacing between different electromagnet adsorption control modules is generally 500 to 800 mm. Meanwhile, the position of the electromagnet control module is continuously adjusted and accurately set with a control accuracy of 0.1 mm by a servo motor along the length, width, and height of the support table 60. A high-precision processing assembly is inlaid at each electromagnet adsorption control module to precisely position and support the box-shaped components. The magnetic field strength of the electromagnet adsorption control module can be adjusted by setting a magnitude of current to ensure that a support adsorption force of each module is digitally set and quantitatively adjusted between 0 and 50 KN. Through the precise control of the electromagnet position and adsorption force, anti-deformation amount precise setting, multi-point precise support positioning and multi-point flexible adsorption and compaction of the box-shaped with an inserted structure in the three directions of length, width and height can be implemented to ensure the precise assembly of the box-shaped structure and effectively constrain the welding process of the box-shaped structure. The assembly mode of electromagnet adsorption changes the unfavorable situation of many spatial physical interferences in traditional assembly, and guarantees the spatial accessibility of laser-arc hybrid welding to the greatest extent. Meanwhile, the assembly mode of electromagnet adsorption ensures precise setting of the spatial position and rigid constraints of the welding process, flexible compaction and dynamic regulation, and refined and real-time regulation capability of welding deformation is greatly improved

In a possible implementation, the electromagnet will not produce welding thermal demagnetization phenomenon compared with the permanent magnet, and the electromagnetic control module distributed with discrete point can independently output the spatial position and adsorption compaction force. The anti-deformation amount and adsorption compaction force can be regulated by the digital and real-time setting of the support position to regulate welding deformation flexibly and finely. Requirements for large-volume laser-arc hybrid welding gun, wide working space and the special assembly and welding requirements of strict assembly accuracy are satisfied.

As shown in FIG. 1 to FIG. 7, the present solution provides a weld method using such weld device, including:
obtaining a first weld characteristic value of the weld structure during a welding process, where the first weld characteristic value is a deformation amount parameter of the weld structure;
generating a first adjustment strategy for regulating a deformation amount of the weld surface of the weld structure based on the first weld characteristic value; and
performing anti-deformation adjustment in real time at the weld structure during the welding process based on the first adjustment strategy.

In detail, the present invention further provides the weld method for the weld device, which solves defects of inability to avoid adjustment and correction to a weld structure, inability to effectively suppress welding deformation, large workload of repeated check, inability to accurately and dynamically adjust the weld structure based on the evolution trend of deformation and change amount of a weld structure, and poor anti-deformation effect. By adjusting a magnitude of the multi-point flexible force at the support surface, zero-gap rapid and precise assembly, multi-point flexible constraint and multi-energy field coordinated high-performance welding are provided, and engineering goals of fine control of welding deformation, effective suppression of welding defects and substantial improvement of weld microstructure performance are simultaneously achieved.

Obtaining the first weld characteristic value of the weld structure during the welding process includes:
obtaining a first deformation characteristic value, a second deformation characteristic value and a third deformation characteristic value of the weld structure during the welding process, where the first deformation characteristic value is a deformation area parameter of the weld structure, the second deformation characteristic value is a deformation force parameter corresponding to the first deformation characteristic value and the third deformation characteristic value is a friction force parameter corresponding to the first deformation characteristic value; and
generating the first weld characteristic value based on the first deformation characteristic value, the second deformation characteristic value and the third deformation characteristic value.

This provides obtaining the first weld characteristic value of the weld structure during the welding process, and corresponding first weld characteristic value is generated by obtaining the deformation characteristic value of the weld structure during the welding process.

In an embodiment, generating the first adjustment strategy for regulating the deformation amount of the weld surface of the weld structure based on the first weld characteristic value includes:
obtaining a preset adjustment area corresponding to the weld surface of the weld structure, and obtaining all adjustment portions in the preset adjustment area based on the first deformation characteristic value;
generating a first adjustment characteristic value of each of obtained adjustment portions based on the second deformation characteristic value, where the first adjustment characteristic value is an adsorption force parameter of each of the obtained adjustment portions;
generating a second adjustment characteristic value of each of the obtained adjustment portions based on the second deformation characteristic value and the third deformation characteristic value, where the second adjustment characteristic value is a friction force parameter between each of the obtained adjustment portions and the weld structure; and
generating the first adjustment strategy for the preset adjustment area based on the first adjustment characteristic value and the second adjustment characteristic value.

This provides an implementation for generating the first adjustment strategy for regulating the deformation amount of the weld surface of the weld structure, anti-deformation adjustment of the weld structure during the welding process is implemented by adjusting a magnitude of an adsorption force of the magnetic unit corresponding to the deformation area based on the adsorption force parameter.

Furthermore, when the magnitude of the adsorption force of the magnetic unit 80 is adjusted, the friction force parameter needs to be monitored to avoid the problem that the weld structure moves during the welding process due to insufficient adsorption force.

In an embodiment, generating the first adjustment strategy for the preset adjustment area based on the first adjustment characteristic value and the second adjustment characteristic value includes:
constructing a digital twin model based on the weld structure;
obtaining a first twin adjustment characteristic value of the digital twin model based on the first adjustment characteristic value;
obtaining a second twin adjustment characteristic value of the digital twin model based on the second adjustment characteristic value;
performing a determination based on the second twin adjustment characteristic value; and
generating the first adjustment strategy based on the first adjustment characteristic value in accordance with a determination that the second twin adjustment characteristic value satisfies a preset adsorption condition; or
generating the first adjustment strategy based on the second adjustment characteristic value in accordance with a determination that the second twin adjustment characteristic value does not satisfy a preset adsorption condition.

This provides an implementation for generating the first adjustment strategy based on the preset adjustment area. By constructing the digital twin model, the anti-deformation amount of the weld structure is calculated, and the adsorption force parameter between the support table 60 and the weld structure are verified to avoid the problem that the weld structure moves on the support table 60 due to insufficient adsorption force of the magnetic unit 80.

In some possible embodiments, performing anti-deformation adjustment in real time at the weld structure during the welding process based on the first adjustment strategy includes:
obtaining an instant weld area of the weld structure and dynamically fitting the instant weld area with the preset adjustment area,
obtaining a dynamically fit first instant adjustment area and a dynamically fit second instant adjustment area, where the first instant adjustment area is an area corresponding to first deformation characteristic value, and the second instant adjustment area is an area within a preset range around the first instant adjustment area;
obtaining a magnetic field distortion parameter in the second instant adjustment area and performing a determination; and
generating the first adjustment strategy based on a preset distortion threshold in accordance with a determination that the magnetic field distortion parameter does not satisfy the preset distortion threshold.

This provides performing anti-deformation adjustment in real time at the weld structure. By monitoring the magnetic field within the preset range around the deformation area of the weld structure, a problem of excessive disturbance to the magnetic field in the surrounding area caused by adjusting the magnetic unit 80 corresponding to the deformation area is avoided, the weld quality is guaranteed, and dynamic regulation of welding deformation in the hybrid welding process is satisfied to ensure engineering requirements of accurate weld position and enhanced weld stability.

In an embodiment, after performing anti-deformation adjustment in real time at the weld structure during the welding process based on the first adjustment strategy, the method further includes:
obtaining a second weld characteristic value and a third weld characteristic value of the weld structure during the welding process, where the second weld characteristic value is a welding trajectory parameter of the weld structure, and the third characteristic value is a weld pool parameter of the weld structure;
generating a second adjustment strategy for regulating a magnetic field direction of the adjustment portion based on the second weld characteristic value and the third weld characteristic value; and
stirring the weld pool of the weld structure during the welding process using magnetic field in real time based on the second adjustment strategy.

This provides stirring the weld pool of the weld structure using the magnetic field. By coupling and regulating laser and arc energy fields of the laser-arc hybrid welding using an alternating magnetic field generated by the magnetic unit 80, a plasma is effectively suppressed, a droplet flight speed and a weld pool flow speed of the laser-arc hybrid welding are increased, the thermal transmission and energy efficiency of the laser and arc are improved, and more stable droplet transition and better arc directivity are obtained. A stirring effect of the magnetic field is formed inside the weld pool to further refine the weld grain structure and enhance the gas escape capability. The mechanical properties and fatigue strength of a hybrid weld joint under the superposition of the magnetic field are improved by at least 5% compared with the traditional hybrid weld joint.

It should be noted that the hybrid welding has concentrated heat source and small action area. It is extremely sensitive to the changes of spatial positions caused by the dynamic fine deformation during the welding process of large and complex components. If the fine deformation in the weld process is not intervened in real time, the cumulative deformation will also cause the subsequent weld position to deviate greatly, and the stability and reliability of the weld process is affected. Therefore, the weld deformation must be intervened in real time and dynamically regulated.

It should also be noted that gas escape is accelerated by utilizing the stirring effect of electromagnetic force inside the weld pool and welding porosity defects are effectively reduced by combining laser-arc hybrid welding and the magnetic field generated by electromagnet adsorption. An arc magnetic bias blowing phenomenon is suppressed by adjusting the direction of the electromagnetic force, and the arc and droplet transition is kept more stable. Through the coupling regulation of magnetic field, laser, and arc multi-energy field, the grain structure at a weld joint is further refined, and the mechanical properties and fatigue strength of the composite weld joint are significantly improved.

In other words, the present invention changes the welding manufacturing mode of the enclosed box-shaped structure from structural design and development, weld device development to welding process development through the comprehensive application of the above innovative methods. The manufacturing accuracy, connection strength and welding quality of the enclosed inserted box-shaped component are significantly improved.

## Claims

1. A weld device for a weld structure, comprising: a support portion, a weld portion (100) and an adjustment portion, the support portion comprising a support table (60),wherein the support portion is formed with a support surface for supporting the weld structure;
the weld portion (100) is connected to the support portion for welding the weld structure; and
the adjustment portion is connected to the support portion and abuts against a weld surface of the weld structure,
**characterized in that**:
the weld portion (100) is a laser-arc hybrid welding mechanism connected with the support portion;
the adjustment portion comprises: a plurality of magnetic units (80) and a plurality of sensor units (90),
wherein the magnetic units (80) are arranged at the support table (60) to position the weld structure through magnetic adsorption; and
the sensor units (90) are arranged at the support table (60) to feed back welding parameters used in the welding process of the weld structure to the weld portion (100), wherein during a welding process of the weld structure by the weld portion (100), the adjustment portion regulates a flatness of the weld structure by adjusting a magnitude of a force acting on the weld surface of the weld structure.

2. The weld device for the weld structure of claim 1, wherein the support portion further comprises: a drive unit (70),
wherein a surface of the support table (60) forms the support surface; and
the drive unit (70) is connected to the support table (60) to adjust a rotation angle of the support table (60).

3. A weld method using a weld device for a weld structure,
the method being **characterized by**:
providing the weld device as a weld device according to one of the claims 1 or 2;
obtaining a first weld characteristic value of the weld structure during a welding process, wherein the first weld characteristic value is a deformation amount parameter of the weld structure;
generating a first adjustment strategy for regulating a deformation amount of the weld surface of the weld structure based on the first weld characteristic value; and
performing anti-deformation adjustment in real time at the weld structure during the welding process based on the first adjustment strategy.

4. The weld method of claim 3, wherein obtaining the first weld characteristic value of the weld structure during the welding process comprises:
obtaining a first deformation characteristic value, a second deformation characteristic value and a third deformation characteristic value of the weld structure during the welding process, wherein the first deformation characteristic value is a deformation area parameter of the weld structure, the second deformation characteristic value is a deformation force parameter corresponding to the first deformation characteristic value, and the third deformation characteristic value is a friction force parameter corresponding to the first deformation characteristic value; and
generating the first weld characteristic value based on the first deformation characteristic value, the second deformation characteristic value and the third deformation characteristic value.

5. The weld method of claim 4, wherein generating the first adjustment strategy for regulating the deformation amount of the weld surface of the weld structure based on the first weld characteristic value comprises:
obtaining a preset adjustment area corresponding to the weld surface of the weld structure, and obtaining all adjustment portions in the preset adjustment area based on the first deformation characteristic value;
generating a first adjustment characteristic value of each of obtained adjustment portions based on the second deformation characteristic value, wherein the first adjustment characteristic value is an adsorption force parameter of each of the obtained adjustment portions;
generating a second adjustment characteristic value of each of the obtained adjustment portions based on the second deformation characteristic value and the third deformation characteristic value, wherein the second adjustment characteristic value is a friction force parameter between each of the obtained adjustment portions and the weld structure; and
generating the first adjustment strategy for the preset adjustment area based on the first adjustment characteristic value and the second adjustment characteristic value.

6. The weld method of claim 5, wherein generating the first adjustment strategy for the preset adjustment area based on the first adjustment characteristic value and the second adjustment characteristic value comprises:
constructing a digital twin model based on the weld structure;
obtaining a first twin adjustment characteristic value of the digital twin model based on the first adjustment characteristic value;
obtaining a second twin adjustment characteristic value of the digital twin model based on the second adjustment characteristic value;
performing a determination based on the second twin adjustment characteristic value; and
generating the first adjustment strategy based on the first adjustment characteristic value in accordance with a determination that the second twin adjustment characteristic value satisfies a preset adsorption condition; or
generating the first adjustment strategy based on the second adjustment characteristic value in accordance with a determination that the second twin adjustment characteristic value does not satisfy a preset adsorption condition.

7. The weld method of claim 5 or 6, wherein performing anti-deformation adjustment in real time at the weld structure during the welding process based on the first adjustment strategy comprises:
obtaining an instant weld area of the weld structure and dynamically fitting the instant weld area with the preset adjustment area;
obtaining a dynamically fit first instant adjustment area and a dynamically fit second instant adjustment area, wherein the first instant adjustment area is an area corresponding to first deformation characteristic value, and the second instant adjustment area is an area within a preset range around the first instant adjustment area;
obtaining a magnetic field distortion parameter in the second instant adjustment area and performing a determination; and
generating the first adjustment strategy based on a preset distortion threshold in accordance with a determination that the magnetic field distortion parameter does not satisfy the preset distortion threshold.

8. The weld method of any of claims 3 to 6, wherein after performing anti-deformation adjustment in real time at the weld structure during the welding process based on the first adjustment strategy, the method further comprises:
obtaining a second weld characteristic value and a third weld characteristic value of the weld structure during the welding process, wherein the second weld characteristic value is a welding trajectory parameter of the weld structure, and the third weld characteristic value is a weld pool parameter of the weld structure;
generating a second adjustment strategy for regulating a magnetic field direction of the adjustment portion based on the second weld characteristic value and the third weld characteristic value; and
stirring the weld pool of the weld structure during the welding process using magnetic field in real time based on the second adjustment strategy.

## Patentansprüche

1. Schweißvorrichtung für eine Schweißstruktur, aufweisend: einen Stützabschnitt, einen Schweißabschnitt (100) und einen Einstellabschnitt, wobei der Stützabschnitt einen Stütztisch (60) aufweist, wobei der Stützabschnitt mit einer Stützfläche zum Stützen der Schweißstruktur ausgebildet ist;
der Schweißabschnitt (100) mit dem Stützabschnitt zum Schweißen der Schweißstruktur verbunden ist; und
der Einstellabschnitt mit dem Stützabschnitt verbunden ist und an einer Schweißfläche der Schweißstruktur anliegt,
wobei während eines Schweißprozesses der Schweißstruktur durch den Schweißabschnitt (100) der Einstellabschnitt eine Ebenheit der Schweißstruktur durch Einstellen einer Größe einer Kraft reguliert, die auf die Schweißfläche der Schweißstruktur wirkt;
**dadurch gekennzeichnet, dass**:
der Schweißabschnitt (100) ein Laser-Lichtbogen-Hybridschweißmechanismus ist, der mit dem Stützabschnitt verbunden ist;
der Einstellabschnitt aufweist: eine Vielzahl von Magneteinheiten (80) und eine Vielzahl von Sensoreinheiten (90),
wobei die Magneteinheiten (80) an dem Stütztisch (60) angeordnet sind, um die Schweißstruktur durch magnetische Adsorption zu positionieren; und
die Sensoreinheiten (90) an dem Stütztisch (60) angeordnet sind, um Schweißparameter, die in dem Schweißprozess der Schweißstruktur verwendet werden, zu dem Schweißabschnitt (100) zurückzuführen.

2. Schweißvorrichtung für die Schweißstruktur nach Anspruch 1, wobei der Stützabschnitt ferner aufweist: eine Antriebseinheit (70),
wobei eine Oberfläche des Stütztischs (60) die Stützfläche bildet; und
die Antriebseinheit (70) mit dem Stütztisch (60) verbunden ist, um einen Drehwinkel des Stütztischs (60) einzustellen.

3. Schweißverfahren unter Verwendung einer Schweißvorrichtung für eine Schweißstruktur,
wobei das Verfahren **gekennzeichnet ist durch**:
Bereitstellen der Schweißvorrichtung als eine Schweißvorrichtung nach einem der Ansprüche 1 oder 2;
Erhalten eines ersten Schweißkennwerts der Schweißstruktur während eines Schweißprozesses, wobei der erste Schweißkennwert ein Verformungsbetragsparameter der Schweißstruktur ist;
Erzeugen einer ersten Einstellstrategie zum Regulieren eines Verformungsbetrags der Schweißfläche der Schweißstruktur basierend auf dem ersten Schweißkennwert; und
Durchführen einer Antiverformungseinstellung in Echtzeit an der Schweißstruktur während des Schweißprozesses basierend auf der ersten Einstellstrategie.

4. Schweißverfahren nach Anspruch 3, wobei das Erhalten des ersten Schweißkennwerts der Schweißstruktur während des Schweißprozesses aufweist:
Erhalten eines ersten Verformungskennwerts, eines zweiten Verformungskennwerts und eines dritten Verformungskennwerts der Schweißstruktur während des Schweißprozesses, wobei der erste Verformungskennwert ein Verformungsbereichsparameter der Schweißstruktur ist, der zweite Verformungskennwert ein Verformungskraftparameter ist, der dem ersten Verformungskennwert entspricht, und der dritte Verformungskennwert ein Reibungskraftparameter ist, der dem ersten Verformungskennwert entspricht; und
Erzeugen des ersten Schweißkennwerts basierend auf dem ersten Verformungskennwert, dem zweiten Verformungskennwert und dem dritten Verformungskennwert.

5. Schweißverfahren nach Anspruch 4, wobei das Erzeugen der ersten Einstellstrategie zum Regulieren des Verformungsbetrags der Schweißfläche der Schweißstruktur basierend auf dem ersten Schweißkennwert aufweist:
Erhalten eines voreingestellten Einstellbereichs, der der Schweißfläche der Schweißstruktur entspricht, und Erhalten aller Einstellabschnitte in dem voreingestellten Einstellbereich basierend auf dem ersten Verformungskennwert;
Erzeugen eines ersten Einstellkennwerts jedes der erhaltenen Einstellabschnitte basierend auf dem zweiten Verformungskennwert, wobei der erste Einstellkennwert ein Adsorptionskraftparameter jedes der erhaltenen Einstellabschnitte ist;
Erzeugen eines zweiten Einstellkennwerts jedes der erhaltenen Einstellabschnitte basierend auf dem zweiten Verformungskennwert und dem dritten Verformungskennwert, wobei der zweite Einstellkennwert ein Reibungskraftparameter zwischen jedem der erhaltenen Einstellabschnitte und der Schweißstruktur ist; und
Erzeugen der ersten Einstellstrategie für den voreingestellten Einstellbereich basierend auf dem ersten Einstellkennwert und dem zweiten Einstellkennwert.

6. Schweißverfahren nach Anspruch 5, wobei das Erzeugen der ersten Einstellstrategie für den voreingestellten Einstellbereich basierend auf dem ersten Einstellkennwert und dem zweiten Einstellkennwert aufweist:
Konstruieren eines digitalen Zwillingsmodells basierend auf der Schweißstruktur;
Erhalten eines ersten Zwillingseinstellkennwerts des digitalen Zwillingsmodells basierend auf dem ersten Einstellkennwert;
Erhalten eines zweiten Zwillingseinstellkennwerts des digitalen Zwillingsmodells basierend auf dem zweiten Einstellkennwert;
Durchführen einer Bestimmung basierend auf dem zweiten Zwillingseinstellkennwert; und
Erzeugen der ersten Einstellstrategie basierend auf dem ersten Einstellkennwert gemäß einer Bestimmung, dass der zweite Zwillingseinstellkennwert eine voreingestellte Adsorptionsbedingung erfüllt; oder
Erzeugen der ersten Einstellstrategie basierend auf dem zweiten Einstellkennwert gemäß einer Bestimmung, dass der zweite Zwillingseinstellkennwert eine voreingestellte Adsorptionsbedingung nicht erfüllt.

7. Schweißverfahren nach Anspruch 5 oder 6, wobei das Durchführen einer Antiverformungseinstellung in Echtzeit an der Schweißstruktur während des Schweißprozesses basierend auf der ersten Einstellstrategie aufweist:
Erhalten eines momentanen Schweißbereichs der Schweißstruktur und dynamisches Anpassen des momentanen Schweißbereichs an den voreingestellten Einstellbereich;
Erhalten eines dynamisch angepassten ersten momentanen Einstellbereichs und eines dynamisch angepassten zweiten momentanen Einstellbereichs, wobei der erste momentane Einstellbereich ein Bereich ist, der dem ersten Verformungskennwert entspricht, und der zweite momentane Einstellbereich ein Bereich innerhalb eines voreingestellten Bereichs um den ersten momentanen Einstellbereich ist;
Erhalten eines Magnetfeldverzerrungsparameters in dem zweiten momentanen Einstellbereich und Durchführen einer Bestimmung; und
Erzeugen der ersten Einstellstrategie basierend auf einem voreingestellten Verzerrungsschwellenwert gemäß einer Bestimmung, dass der Magnetfeldverzerrungsparameter den voreingestellten Verzerrungsschwellenwert nicht erfüllt.

8. Schweißverfahren nach einem der Ansprüche 3 bis 6, wobei nach dem Durchführen einer Antiverformungseinstellung in Echtzeit an der Schweißstruktur während des Schweißprozesses basierend auf der ersten Einstellstrategie das Verfahren ferner aufweist:
Erhalten eines zweiten Schweißkennwerts und eines dritten Schweißkennwerts der Schweißstruktur während des Schweißprozesses, wobei der zweite Schweißkennwert ein Schweißbahnparameter der Schweißstruktur ist und der dritte Schweißkennwert ein Schweißbadparameter der Schweißstruktur ist;
Erzeugen einer zweiten Einstellstrategie zum Regulieren einer Magnetfeldrichtung des Einstellabschnitts basierend auf dem zweiten Schweißkennwert und dem dritten Schweißkennwert; und
Rühren des Schweißbads der Schweißstruktur während des Schweißprozesses unter Verwendung eines Magnetfelds in Echtzeit basierend auf der zweiten Einstellstrategie.

## Revendications

1. Un dispositif de soudure pour une structure de soudure, comprenant : une partie de support, une partie de soudure (100) et une partie d'ajustement, la partie de support comprenant une table de support (60), dans lequel la partie de support est formée avec une surface de support pour soutenir la structure de soudure ;
la partie de soudure (100) est connectée à la partie de support pour souder la structure de soudure ; et
la partie d'ajustement est connectée à la partie de support et vient en butée contre une surface de soudure de la structure de soudure,
**caractérisé en ce que** :
la partie de soudure (100) est un mécanisme de soudage hybride à arc laser connecté à la partie de support ;
la partie d'ajustement comprend : une pluralité d'unités magnétiques (80) et une pluralité d'unités de capteurs (90),
dans lequel les unités magnétiques (80) sont disposées à la table de support (60) pour positionner la structure de soudure à travers l'adsorption magnétique ; et
les unités de capteurs (90) sont disposées à la table de support (60) pour donner en retour des paramètres de soudage utilisés dans le processus de soudage de la structure de soudure à la partie de soudure (100),
dans lequel durant un processus de soudage de la structure de soudure par la partie de soudure (100), la partie d'ajustement régule la platitude de la structure de soudure par ajustement de la magnitude d'une force agissant sur la surface de soudure de la structure de soudure.

2. Le dispositif de soudure pour la structure de soudure selon la revendication 1, dans lequel la partie de support en outre comporte : une unité de commande (70),
dans lequel une surface de la table de support (60) forme la surface de support ; et
l'unité de commande (70) est connectée à la table de support (60) pour ajuster un angle de rotation de la table de support (60).

3. Un procédé de soudure utilisant un dispositif de soudure pour une structure de soudure, le procédé étant **caractérisé en ce qu'**il comporte les étapes suivantes :
- fournir le dispositif de soudure en tant qu'un dispositif de soudure selon l'une des revendications 1 ou 2 ;
- obtenir une première valeur caractéristique de soudure de la structure de soudure durant un processus de soudage, dans lequel la première valeur caractéristique de soudure est un paramètre de quantité de déformation de la structure de soudure ;
- générer une première stratégie d'ajustement pour réguler une quantité de déformation de la surface de soudure de la structure de soudure sur la base de la première valeur caractéristique de soudure ; et
- effectuer un ajustement anti-déformation en temps réel sur la structure de soudure durant le processus de soudage sur la base de la première stratégie d'ajustement.

4. Le procédé de soudure selon la revendication 3, selon lequel l'obtention de la première valeur caractéristique de soudure de la structure de soudure durant le processus de soudage comprend les étapes suivantes :
- obtenir une première valeur caractéristique de déformation, une deuxième valeur caractéristique de déformation et une troisième valeur caractéristique de déformation de la structure de soudure durant le processus de soudage,
selon lequel la première valeur caractéristique de déformation est un paramètre de zone de déformation de la structure de soudure, la deuxième valeur caractéristique de déformation est un paramètre de force de déformation correspondant à la première valeur caractéristique de déformation, et la troisième valeur caractéristique de déformation est un paramètre de force de friction correspondant à la première valeur caractéristique de déformation ; et
- générer la première valeur caractéristique de soudure sur la base de la première valeur caractéristique de déformation, la deuxième valeur caractéristique de déformation et la troisième valeur caractéristique de déformation.

5. Le procédé de soudure selon la revendication 4, selon lequel la génération de la première stratégie d'ajustement pour réguler la quantité de déformation de la surface de soudure de la structure de soudure sur la base de première valeur caractéristique de soudure comprend les étapes consistant à :
- obtenir une zone d'ajustement préétablie correspondant à la surface de soudure de la structure de soudure, et obtenir toutes les parties d'ajustement dans la zone d'ajustement préétablie sur la base de la première valeur caractéristique de déformation ;
- générer une première valeur caractéristique d'ajustement de chacune des parties d'ajustement obtenues sur la base de la deuxième valeur caractéristique de déformation, selon lequel la première valeur caractéristique d'ajustement est un paramètre de force d'adsorption de chacune des parties d'ajustement obtenues ;
- générer une deuxième valeur caractéristique d'ajustement de chacune des parties d'ajustement obtenues sur la base de la deuxième valeur caractéristique de déformation et de la troisième valeur caractéristique de déformation, selon lequel la deuxième valeur caractéristique d'ajustement est un paramètre de force de friction entre chacune des parties d'ajustement obtenues et la structure de soudure ; et
- générer la première stratégie d'ajustement pour la zone d'ajustement préétablie sur la base de la première valeur caractéristique d'ajustement et de la deuxième valeur caractéristique d'ajustement.

6. Le procédé de soudure selon la revendication 5, selon lequel la génération de la première stratégie d'ajustement pour la zone d'ajustement préétablie sur la base de la première valeur caractéristique d'ajustement et de la deuxième valeur caractéristique d'ajustement comprend les étapes consistant à :
- construire un modèle jumeau numérique sur la base de la structure de soudure ;
- obtenir une première valeur caractéristique d'ajustement jumeau du modèle jumeau numérique sur la base de la première valeur caractéristique d'ajustement ;
- obtenir une deuxième valeur caractéristique d'ajustement jumeau du modèle jumeau numérique sur la base de la deuxième valeur caractéristique d'ajustement ;
- effectuer une détermination sur la base de la deuxième valeur caractéristique d'ajustement jumeau ; et
- générer la première stratégie d'ajustement sur la base de la première valeur caractéristique d'ajustement en accord avec une détermination que la deuxième valeur caractéristique d'ajustement jumeau satisfait une condition d'adsorption préétablie ; ou
- générer la première stratégie d'ajustement sur la base de la deuxième valeur caractéristique d'ajustement en accord avec une détermination que la deuxième valeur caractéristique d'ajustement jumeau ne satisfait pas une condition d'adsorption préétablie.

7. Le procédé de soudure selon la revendication 5 ou 6, selon lequel effectuer un ajustement anti-déformation en temps réel sur la structure de soudure durant le processus de soudage sur la base de la première stratégie d'ajustement comprend les étapes consistant à :
- obtenir une zone de soudure instantanée de la structure de soudure et régler dynamiquement la zone de soudure instantanée avec la zone d'ajustement préétablie ;
- obtenir une première zone d'ajustement instantanée dynamiquement réglée et une deuxième zone d'ajustement instantanée dynamiquement réglée, selon lequel la première zone d'ajustement instantanée est une zone correspondant à une première valeur caractéristique de déformation, et la deuxième zone d'ajustement instantanée est une zone dans une plage prédéfinie autour de la première zone d'ajustement instantanée ;
- obtenir un paramètre de distorsion de champ magnétique dans la deuxième zone d'ajustement instantanée et effectuer une détermination ; et
- générer la première stratégie d'ajustement sur la base d'un seuil de distorsion prédéfini en accord avec une détermination que le paramètre de distorsion de champ magnétique ne satisfait pas le seuil de distorsion prédéfini.

8. Le procédé de soudure selon l'une quelconque des revendications 3 à 6, selon lequel après la réalisation de l'ajustement anti-déformation en temps réel sur la structure de soudure durant le processus de soudage sur la base de la première stratégie d'ajustement, le procédé comprend en outre les étapes consistant à :
- obtenir une deuxième valeur caractéristique de soudure et une troisième valeur caractéristique de soudure durant le processus de soudage, selon lequel la deuxième valeur caractéristique de soudure est un paramètre de trajectoire de soudage de la structure de soudure, et la troisième valeur caractéristique de soudure est un paramètre de bain de soudure de la structure de soudure ;
- générer une deuxième stratégie d'ajustement pour réguler une direction de champ magnétique de la partie d'ajustement sur la base de la deuxième valeur caractéristique de soudure et de la troisième valeur caractéristique de soudure ; et
- remuer le bain de soudure de la structure de soudure durant le processus de soudage en utilisant le champ magnétique en temps réel sur la base de la deuxième stratégie d'ajustement.
